# EUROPÄISCHE PATENTSCHRIFT

(11) **EP 4 007 891 B1**
(45) Veröffentlichungstag und Bekanntmachung des Hinweises auf die Patenterteilung: **18.10.2023**
(21) Anmeldenummer: 20750614.8
(22) Anmeldetag: 27.07.2020
(51) Int. Cl.: G01C 21/36, G01C 21/30, G01C 21/00, B60W 50/02, G01S 17/86, G01S 17/931, B60W 50/023, B60W 50/029, G01S 17/89, G05D 1/02

(54) **VERFAHREN UND VORRICHTUNG ZUR LOKALISIERUNG EINES FAHRZEUGS IN EINER UMGEBUNG**
METHOD AND DEVICE FOR LOCATING A VEHICLE IN A SURROUNDING AREA
PROCÉDÉ ET DISPOSITIF POUR LOCALISER UN VÉHICULE DANS UNE ZONE ENVIRONNANTE

(30) Priorität: 01.08.2019 DE 102019120778
(43) Veröffentlichungstag der Anmeldung: 08.06.2022
(73) Patentinhaber: Valeo Schalter und Sensoren GmbH, 74321 Bietigheim-Bissingen (DE)
(72) Erfinder: ZUTHER, Sebastian, 74321 Bietigheim-Bissingen (DE); DUBITZKY, Rolf, 74321 Bietigheim-Bissingen (DE)
(74) Vertreter: Withopf, Kristina
(86) Internationale Anmeldenummer: PCT/EP2020/071077
(87) Internationale Veröffentlichungsnummer: WO 2021/018815

(56) Entgegenhaltungen:
- DE-A1-102014 213 171

## Beschreibung

Die vorliegende Erfindung betrifft ein Verfahren zur Lokalisierung eines Fahrzeugs in einer Umgebung. Auch betrifft die vorliegende Erfindung eine Vorrichtung zur Lokalisierung eines Fahrzeugs in einer Umgebung. Des Weiteren betrifft die vorliegende Erfindung ein Fahrassistenzsystem und ein Computerprogramm.

Zukünftige Fahrerassistenzsysteme benötigen neben der Information über den aktuellen Fahrzustand eine Umgebungserfassung und -modellierung. Je nach Komplexität der Assistenzfunktion wird diese einen unterschiedlichen Detaillierungsgrad aufweisen, wobei für Sicherheitssysteme, wie beispielsweise einen automatischer Bremseingriff, die höchsten Anforderungen gelten. Sowohl die geometrischen als auch die dynamischen Merkmale potenzieller Kollisionspartner müssen möglichst genau bestimmt werden. Da keine heute verfügbare Sensorik in der Lage ist, allen Anforderungen gerecht zu werden, ist die Sensordatenfusion von heterogenen Sensoren erforderlich. Hierbei können die Vorteile von Radarsensoren bei der Bestimmung der dynamischen Objekteigenschaften mit den Vorteilen optischer Systeme bei der Bestimmung der geometrischen Merkmale kombiniert werden. Für eine optimale Fusion sind jedoch unterschiedliche Aspekte zu berücksichtigen.

Moderne Fahrerassistenzsysteme zeigen einen Entwicklungstrend vom reinen Komfortsystem, die den Fahrer unterstützt und bei Routinetätigkeiten entlastet, hin zu Warn- und Sicherheitssystemen, die aktiv zur Verminderung oder Vermeidung von Unfallfolgen beitragen. Der Schritt von der Abstandsregelung zum Precrash- oder Kollisionsvermeidungssystem stellt hierbei einen erheblichen Anspruch an die sensorische Umfelderfassung, wobei neben der Dynamik von Objekten auch deren Formparameter zu berücksichtigen sind

Aus dem Stand der Technik sind bereits kamerabasierte Systeme bekannt, die während des Betriebs die Umgebung wahrnehmen, verarbeiten und daraus für die befahrene Strecke Minikarten der statischen Umgebung ableiten. Diese Minikarten werden mittels einer Mobilfunkverbindung zu einem Backend geschickt. Diese Minikarten werden dann mit geeigneten Verfahren in größere Karten integriert, bzw. die gespeicherten Karten werden mit geeigneten Algorithmen aktualisiert. Um die Schwächen der Kamerasensorik zu umgehen z.B. keine Detektion von Fahrspuren bei tiefstehender Sonne oder verdeckte Verkehrsschilder, werden wiederum Teile der gespeicherten Karten (Teilkarten) über die Mobilfunkverbindung in das automatisiert fahrende Fahrzeug zurückgesendet. Das Fahrzeugsystem benutzt die Wahrnehmung der Kamera und gleicht diese mit der empfangenen Karte ab, um sich präzise darin zu lokalisieren.

Der Nachteil dieser kamerabasierten Systeme liegt darin, dass die einzige Redundanz in der Nutzung einer digitalen Karte steckt. Diese beinhaltet jedoch keine Verkehrsteilnehmer und kann auch systematische Fehler enthalten. Es handelt sich also nur um eine teilweise Redundanz. Da dieses System nur auf einer einzigen Kamera basiert kann es sein, dass die Kamera nicht alle Straßenbenutzer detektiert. Des Weiteren kann es passieren, dass die Kamera systematische Fehler in der Detektion von Hindernissen hat. Diese werden dann weder im Fahrzeug noch in der Karte oder der Teilkarte wahrgenommen. Dies wird unweigerlich zu Unfällen führen, in denen der Fahrer unachtsam war und das System nicht alle relevanten Informationen wahrnehmen oder über die digitale Karte, welche unter Umständen veraltet ist, empfangen konnte.

Des Weiteren sind aus dem Stand der Technik Systeme bekannt, die mit Hilfe von Sensorfusion und heterogener Sensorik (z.B. Kamera, Radar, Lidar) die Wahrnehmung verbessern. Da jedoch jede Sensorik ihre Schwächen hat, führt dies zu einer Vielzahl von zu verwendenden Sensoren und damit zu hohen Systemkosten. Die hohen Systemkosten sprechen bisher dagegen, dass sich automatisierte Fahrzeuge im großen Maßstab etablieren können.

Die heute verfügbaren Systeme zum automatisierten Fahren verwenden zumeist Kameras und Radarsensoren. Der Vorteil der Kamera ist die semantische Information, und der Vorteil des Radars liegt in der genauen Distanzinformation. Die Schwäche eines Radarsensors liegt jedoch in der schlechten lateralen Positionsauflösung sowie darin, dass der Radarsensor Objekte aus Kunststoff oder geringem Radarrückstreuquerschnitt gar nicht oder nur sehr schlecht detektieren kann. Es können mit Radarsensoren zwar digitale Karten aufgebaut werden, diese sind jedoch meist von nur geringer Güte und enthalten nur wenig bis keine semantische Information. Außerdem können Fahrspuren nicht von der Radarsensorik erkannt werden.

In der DE 10 2007 058 192 A1 wird ein zentrales Steuergerät für mehrere in einem Kraftfahrzeug vorgesehene Assistenzsysteme beschrieben, die jeweils einzeln arbeiten und von denen mindestens ein Assistenzsystem mit Umfeldsensoren ausgestattet ist. Das zentrale Steuergerät ist mit den einzelnen Assistenzsystemen verbunden und dazu eingerichtet, Sensorinformationen von den Assistenzsystemen zu erhalten und auszuwerten sowie Status- und/oder Steuerbefehle an die Assistenzsysteme zurückzumelden. Um durch die Assistenzsysteme auch sicherheitsrelevante Eingriffe in die Fahrdynamik realisieren zu können, wird vorgeschlagen, dass das zentrale Steuergerät eine Sicherheitskontrolleinheit aufweist, welche dazu eingerichtet ist, nichtredundante Sensorinformationen der einzelnen Assistenzsysteme mittels analytischer Redundanzen verschiedener, von dem zentralen Steuergerät erhaltener Sensorinformationen zu überprüfen.

Aus der DE 10 2010 003 375 A1 ist ein Umfeldbewertungssystem in einem Fahrzeug mit einem elektronischen Steuergerät, mit Sensormitteln zur Erfassung von Objekten im Umfeld des Fahrzeuges und mit Auswertemitteln zur Bewertung von Objekten im Umfeld des Fahrzeugs im Hinblick auf die Relevanz der Objekte als Zielobjekte für ein Warn-Steuer- oder Regelsystem im Fahrzeug bekannt, wobei das Steuergerät mit den Sensormitteln verbunden ist und die Auswertemittel umfasst. Das Steuergerät ist derart ausgestaltet, dass Objekte durch erste Sensormittel und durch zweite Sensormittel erfassbar sind. In einer ersten Betriebsart des Steuergeräts wird ein Objekt nur dann als relevantes Zielobjekt angesehen, wenn es sowohl durch die ersten Sensormittel als auch und durch die zweiten Sensormittel erfasst wird. In einer zweiten Betriebsart des Steuergeräts wird ein Objekt als relevantes Zielobjekt ausgewählt, wenn es nur durch die ersten Sensormittel erfasst wird.

Aus der DE 10 2012 215 465 ist ein Verfahren zum Filtern von Objektinformationen bekannt, wobei eine erste Objektinformation und eine zweite Objektinformation eingelesen werden, wobei die erste Objektinformation zumindest ein, von einem ersten Sensor erfasstes und erkanntes Objekt repräsentiert und die zweite Objektinformation zumindest zwei von einem zweiten Sensor erfasste und erkannte Objekte repräsentiert, wobei der erste Sensor auf einem ersten Sensorprinzip basiert und der zweite Sensor auf einem zweiten Sensorprinzip basiert, wobei sich das erste Sensorprinzip von dem zweiten Sensorprinzip unterscheidet, wobei zumindest eines der Objekte in der zweiten Objektinformation auch in der ersten Objektinformation repräsentiert ist, wobei eine gefilterte Objektinformation ausgegeben wird, die diejenigen Objekte repräsentiert, die in der zweiten Objektinformation und nicht in der zweiten Objektinformation repräsentiert sind.

Aus der EP 2 604 478 B1 ist ein Verfahren zur Bestimmung des tatsächlichen Leistungsparameters einer Multisensoranordnung auf der Grundlage von Informationen aus der Datenfusion von Daten, die von Sensoren empfangen werden, z. B. Radarsensor und Kamerasensor der Sensoranordnung, bekannt. Die Datenfusion wird zum Erfassen der tatsächlichen Fahrzeugumgebung ausgeführt. Der ermittelte Parameter wird mit dem erwarteten Leistungsparameter der Sensoranordnung verglichen. Basierend auf dem Ergebnis des Vergleichs des tatsächlichen Parameters mit dem erwarteten Parameter wird eine Bestimmung durchgeführt, ob ein Funktionsfehler der Sensoren vorliegt oder nicht.

Aus der EP 3 208 635 B1 ist ein Verfahren und ein System, das eine Low-Level-Fusion von Radar- oder LiDAR-Daten mit einem Bild von einer Kamera durchführt, bekannt. Das System umfasst einen Radarsensor, eine Kamera und eine Steuerung. Der Radarsensor wird verwendet, um ein Radarsignal zu erfassen, das von einem Objekt in einem Radarsichtfeld reflektiert wird. Die Kamera wird verwendet, um ein Bild des Objekts in einem Kamerasichtfeld aufzunehmen, dass das Radarsichtfeld überlappt. Die Steuerung steht mit dem Radarsensor und der Kamera in Verbindung. Die Steuerung ist konfiguriert, um eine Position einer Radardetektion in dem durch das Radarsignal angezeigten Bilds zu bestimmen, eine parametrische Kurve des Bildes basierend auf den Radar Detektionen zu bestimmen, einen Interessenbereich des Bildes basierend auf der parametrischen Kurve zu definieren, die von der Radardetektion abgeleitet ist, und den Interessenbereich des Bildes zum Bestimmen einer Identität des Objekts zu verarbeiten.

Aus der DE102014213171 A1 ist ein System zur autonomen Fahrzeugführung mit mehreren Komponenten bekannt, die jeweils unabhängig voneinander zur autonomen Fahrzeugsteuerung ausgebildet sind, so dass selbst bei einem Ausfall von einzelnen Komponenten die autonome Fahrzeugführung bereitgestellt werden kann.

Ausgehend von dem oben genannten Stand der Technik liegt der Erfindung somit die Aufgabe zugrunde, ein Verfahren zur Lokalisierung eines Fahrzeugs in einer Umgebung anzugeben, bei dem durch ein redundantes System die Lokalisierung verbessert wird und dadurch die Verfügbarkeit und die Ausfallsicherheit eines Systems zum automatisierten Fahren eines Fahrzeugs verbessert wird.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist ein Verfahren zur Lokalisierung eines Fahrzeugs in einer Umgebung gemäß Anspruch 1 angegeben.

Grundidee der vorliegenden Erfindung ist es also, eine Lokalisierung des Fahrzeugs in der Umgebung durch einen Abgleich der Umgebungsdaten eines Primärsensorsystems mit einer plausibilisierten Primärsensorsystemteilkarte und durch einen Abgleich der Umgebungsdaten eines Sekundärsensorsystems mit einer plausibilisierten Sekundärsensorsystemteilkarte durchzuführen. Damit wird ein redundantes System mit heterogener Wahrnehmung bereitgestellt. Das Sekundärsensorsystem implementiert zusätzlich eine Rückfallebene für den Fall, in dem das Primärsensorsystem ausgefallen ist, nicht mehr betriebsbereit ist oder festgestellt hat, dass es nur noch eingeschränkt verfügbar ist. Dadurch werden die Verfügbarkeit und die Ausfallsicherheit der Systems verbessert. Außerdem trägt das Sekundärsensorsystem dazu bei, die aktive Wahrnehmung des Primärsensorsystems mittels plausibilisierten Teilkarten zu verbessern, wodurch auch eine automatisierte Fahrfunktion eines Fahrzeugs verbessert wird.

Erfindungsgemäß umfasst der Schritt der Erzeugung von zumindest einer plausibilisierten Primärsensorsystemteilkarte und zumindest einer plausibilisierten Sekundärsensorsystemteilkarte die folgenden weiteren Schritte:
- Erstellung einer Fusionskarte auf Basis der Umgebungskarte des Primärsensorsystems und der Umgebungskarte des Sekundärsensorsystems,
- Verwendung der Fusionskarte zur Erstellung der plausibilisierten Primärsensorsystemteilkarte und zur Erstellung der plausibilisierten Sekundärsensorsystemteilkarte.

Erfindungsgemäß umfasst das Rechensystem eine Recheneinheit des Primärsensorsystems und eine Recheneinheit des Sekundärsensorsystems, wobei das Erstellen von Umgebungskarten aus den Umgebungsdaten des Primärsensorsystem mittels der Recheneinheit des Primärsensorsystems und das Erstellen von Umgebungskarten aus den Umgebungsdaten des Sekundärsensorsystems mittels der Recheneinheit des Sekundärsensorsystem erfolgt.

Erfindungsgemäß umfasst das Rechensystem eine dritte Recheneinheit, wobei der Schritt der Erzeugung von zumindest einer plausibilisierten Primärsensorsystemteilkarte und zumindest einer plausibilisierten Sekundärsensorsystemteilkarte auf der dritten Recheneinheit durchgeführt wird.

In einer weiter vorteilhaften Ausgestaltung der Erfindung ist die dritte Recheneinheit Teil eines Back-End, wobei sich das Back-End außerhalb des Fahrzeugs befindet.

In einer vorteilhaften Ausgestaltung der Erfindung erfolgt der Schritt der Übertragung der erstellten Umgebungskarten des Primärsensorsystems und der erstellten Umgebungskarten des Sekundärsensorsystems an das Rechnersystem, mittels einer drahtlosen Datenverbindung.

In einer weiter vorteilhaften Ausgestaltung der Erfindung ist das Primärsensorsystem ein kamerabasiertes Sensorsystem.

In einer vorteilhaften Ausgestaltung der Erfindung ist das Sekundärsensorsystem ein lidarbasiertes Sensorsystem.

In einer weiter vorteilhaften Ausgestaltung der Erfindung umfasst der Schritt der Durchführung eines Fahrvorgangs ein Notbremsvorgang oder ein Anhalten innerhalb einer Fahrspur oder ein langsames Ausrollen innerhalb einer Fahrspur. Erfindungsgemäß ist außerdem ein eine Vorrichtung zur Lokalisierung eines Fahrzeugs in einer Umgebung angegeben, wobei die Vorrichtung derart eingerichtet ist, das Verfahren nach einem der zuvor beschriebenen Ausgestaltungen der Erfindung durchzuführen.

Weiter ist erfindungsgemäß ein Fahrassistenzsystem angegeben mindestens aufweisend die zuvor beschriebene Vorrichtung.

Erfindungsgemäß ist auch ein Computerprogrammprodukt mit Programmcodemitteln, welche in einem computerlesbaren Medium gespeichert sind, um das Verfahren nach einem der zuvor beschriebenen Ausgestaltungen der Erfindung durchzuführen, wenn das Computerprogrammprodukt auf einem Prozessor einer elektronischen Steuerungseinheit abgearbeitet wird.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

### Es zeigt

- Fig. 1: eine schematische Ansicht eines automatisierten Fahrzeugs mit eingezeichneten Erfassungsbereichen von verschiedenen Sensorsystem,
- Fig. 2: ein schematisches Blockschaltbild einer Vorrichtung zum Ausführen eines Verfahren zur Lokalisierung eines Fahrzeugs in einer Umgebung gemäß einem Ausführungsbeispiel der Erfindung,
- Fig. 3: ein schematisches Blockschaltbild der Übertragung gemäß einem Ausführungsbeispiel der Erfindung,
- Fig. 4: ein schematisches Blockschaltbild des Empfangs von plausibilisierten Teilkarten gemäß einem Ausführungsbeispiel der Erfindung,
- Fig. 5: ein schematisches Ablaufdiagramm eines Verarbeitungsprozesses des Verfahrens im Backend gemäß einem Ausführungsbeispiel der Erfindung.

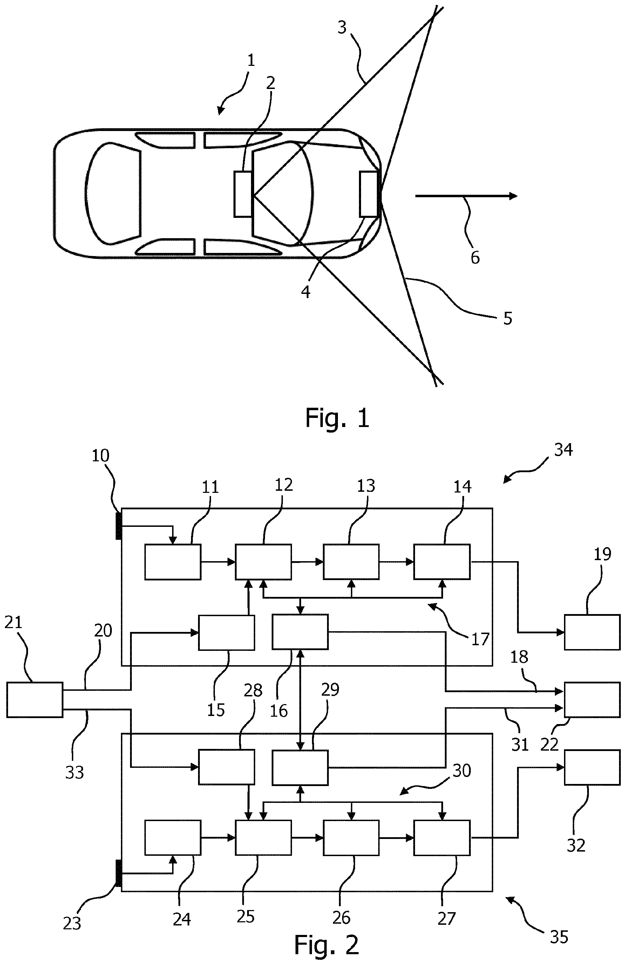

Die Figur 1 zeigt ein automatisiertes Fahrzeug 1 mit zwei verschiedenen Sensorsystemen 2, 4. Die Sensorsysteme 2, 4 können zum Beispiel ein kamerabasiertes System 2 und zum anderen ein lidarbasiertes System 4 sein. In Fig. 1 ist gezeigt, dass die Sensorsysteme 2, 4 in Fahrtrichtung 6 des Fahrzeugs 1 angeordnet sind und über unterschiedliche Erfassungsbereiche 3, 5 verfügen. Eines dieser Sensorsysteme 2, 4 stellt dabei ein Primärsensorsystem 2, das andere ein Sekundärsensorsystem 4 da. Beispielsweise kann das kamerabasierte System 2 die Rolle des Primärsensorsystems 2 übernehmen. Die Rolle des Primärsensorsystems kann aber auch von dem lidarbasierten System 4 übernommen werden. Besonders vorteilhaft für dieses System ist, dass für den Lidarsensor 4 kein teurer 360° Sensor oder ein Sensor mit besonders großem horizontalem Erfassungsbereich benötigt wird. Ein horizontaler Erfassungsbereich von ca. 100 - 120 ° reicht aus. Für das lidarbasierte Sensorsystem 4 kann auch ein Flashlidar verwendet werden. Der Vorteil des Flashlidars liegt hier in der Wahrnehmung semantischer Information wie z.B. Verkehrsschildern oder Ampeln. Außerdem sind die Herstellungskosten sehr gering.

Die Figur 2 zeigt ein schematisches Blockschaltbild der Datenverarbeitung eines Verfahrens zur Lokalisierung eines Fahrzeugs 1 in einer Umgebung gemäß einem Ausführungsbeispiel der Erfindung. Die Vorrichtung umfasst zwei Sensorsysteme 2, 4, ein kamerabasiertes Sensorsystem 2 und ein lidarbasiertes Sensorsystem 4.

Das kamerabasierte Sensorsystem 2 umfasst dabei eine Kamera 10, mit der die Umgebung des Fahrzeugs aufgenommen wird. Die Kamera 10 kann beispielsweise eine Frontkamera 10 des Fahrzeugs sein. Bei der Aufnahme der Umgebung mittels der Frontkamera 10 werden statische Hindernisse aber auch weitere Verkehrsteilnehmer aufgenommen. Aus den durch die Kamera 10 aufgenommenen Umgebungsdaten des kamerabasierten Sensorsystems bzw. Primärsensorsystems 2, 34, 41, 52 wird anschließend eine Umgebungskarte 18, 64, 42 der Umgebung erstellt. Die Umgebungskarte 18, 64, 42 kann insbesondere eine Minikarte der Umgebung sein. Die Umgebungskarte 18, 64, 42 wird dabei mittels einer Recheneinheit eines Rechensystems erstell. Die Recheneinheit kann insbesondere Teil des kamerabasierten Sensorsystems 2 sein. Dabei ist es auch vorteilhaft, wenn die Recheneinheit des kamerabasierten Sensorsystems 2 derart ausreichend bemessen ist, um die notwendigen Signalverarbeitungsschritte und die Funktion des automatisierten Fahrens vollständig zu beinhalten.

Die Minikarte bzw. die Umgebungskarte 18, 64, 42 des Primärsensorsystems 2, 34, 41, 52 basierend auf den Umgebungsdaten der Kamera 10, im folgenden auch Kameraminikarte 2, 34, 41, 52 genannt, wird anschließend über eine Datenverbindung an eine weitere Recheneinheit 60 übertragen. Die weitere Recheneinheit 60 kann insbesondere ein Backend 60 sein. Das Backend 60 kann sich dabei auch außerhalb des Fahrzeugs befinden und mittels einer drahtlose Datenverbindung mit dem Fahrzeug 1 verbunden sein. Beispielsweise kann für die Datenübertragung eine Mobilfunkdatenverbindung vorgesehen sein. Insbesondere kann für die Datenübertragung eine Mobilfunkverbindung nach dem neuen 5G Standard vorgesehen sein, die über genügend Bandbreite für die Datenübertragung verfügt. Für die Übertragung der Minikarten 18, 64, 42, 31, 66, 45 an das Backend 60 verfügt die in Fig. 2 gezeigte Vorrichtung über einen Mobilfunksender 22 und einen Mobilfunkempfänger 21. insbesondere kann es vorgesehen sein, dass der Mobilfunksender 22 sowie der Mobilfunkempfänger 21 gemeinsam von dem kamerabasierten 2 und dem lidarbasierten Sensorsystem 4 verwendet werden. Die an das Backend 60 gesendeten Minikarten 18, 64, 42 werden durch einen Server des Backend 60 empfangen, aufbereitet und plausibilisierte Teilkarten (plausibilisierte Kamerateilkarte bzw. plausibilisierte Primärsensorsystemteilkarte) 20, 51, 74 erstellt, die zurück an das kamerabasierte Sensorsystem 2, 4 gesendet werden.

Das kamerabasierte Sensorsystem 2 lokalisiert das Fahrzeugs 1 in der Umgebung durch einen Abgleich der Umgebungsdaten des Primärsensorsystems 2, 34, 41, 52 mit der plausibilisierten Primärsensorsystemteilkarte 33, 55, 76.

Das lidarbasierte Sensorsystem 4 verwendet einen Lidarsensor 23 zur Erfassung der Umgebung. Ebenso wie das kamerabasierte Sensorsystem 2 erfasst das lidarbasierte Sensorsystem 4 statische Hindernisse aber auch weitere Verkehrsteilnehmer in der Umgebung des Fahrzeugs 1. Aus diesen erfassten Sensordaten erstellt auch das lidarbasierte Sensorsystem 4 zumindest eine Umgebungskarte 4, 35, 44, 56 bzw. eine Minikarte der Umgebung (Lidarminikarte bzw. Umgebungskarte 31, 66, 45 des Sekundärsensorsystems) 4, 35, 44, 56, sendet diese an ein Backend 60 und empfängt von diesem Server aufbereitete und plausibilisierte Teilkarten (plausibilisierte Sekundärsensorsystemteilkarte bzw. plausibilisierte Lidarteilkarte) 33, 55, 76. Das System lokalisiert das Fahrzeug ebenfalls durch einen Abgleich der durch den Lidarsensor aufgenommenen Umgebungsdaten mit der plausibilisierten Lidarteilteilkarte 33, 55, 76.

Die Signalverarbeitung der beiden Sensorsysteme 2, 4 kann prinzipiell gleich aufgebaut sein und die gleichen Verarbeitungsschritte umfassen. Nach der Erfassung 11, 24 von Umgebungsdaten mittels der Kamera 10 oder des Lidarsensors 13 werden in den Umgebungsdaten Objekte in der Umgebung des Fahrzeugs wahrgenommen 12, 25. Danach findet eine Lokalisierung des Fahrzeugs in der Umgebung statt 12, 25. Anschließend können diese Daten für eine Planung möglicher Maßnahmen 13, 26 auf Grundlage der erfassten Objekte und der Lokalisierung des Fahrzeugs 1 in der Umgebung verwendet werden. Die Lokalisierung des Fahrzeugs 1 in der Umgebung wird durch einen Abgleich der Umgebungsdaten des Primärsensorsystems 2, 34, 41, 52 mit der plausibilisierten Primärsensorsystemteilkarte 33, 55, 76 und durch einen Abgleich der Umgebungsdaten des Sekundärsensorsystems 4, 35, 44, 56 mit der plausibilisierten Sekundärsensorsystemteilkarte 33, 55, 76 erreicht. Die Lokalisierung des Fahrzeugs durch das Primärsensorsystem 2, 34, 41, 52 wird mit der Lokalisierung des Fahrzeugs durch das Sekundärsensorsystem 4, 35, 44, 56 verglichen.

Dazu kann es insbesondere vorgesehen sein, dass eine Freigabeprüfung 14, 27 stattfindet, bevor eines der beiden Sensorsystem 2, 4 weitere Maßnahmen veranlasst.

Beide Sensorsysteme 2, 4 senden sich die Ergebnisse der Verarbeitungsschritte 16, 29 zu und vergleichen, ob diese in definierten Grenzen mit denen des anderen Sensorsystems 2, 4 kompatibel sind. Wenn dies der Fall ist, übermittelt das jeweilige Sensorsystem 2, 4 eine Freigabe 14, 27 an das andere Sensorsystem 2, 4. Nur wenn beide Sensorsysteme 2, 4 eine Freigabe 14, 27 erteilen, wird das automatisierte Fahren fortgeführt. Die Freigabeprüfung 14, 27 kann direkt in den Sensorsystemen 2, 4, aber auch außerhalb von einer Fahrzeuglogik übernommen werden. Sobald eines der beiden Sensorsysteme 2, 4 für eine gewisse Zeit keine Freigabe 14, 27 mehr erteilt, wird das automatisierte Fahren gestoppt und in einen Rückfallmodus gewechselt. In diesem Rückfallmodus wird das Fahrzeug 1 in einen für die Insassen und die anderen Verkehrsteilnehmer sicheren Zustand versetzt. Hierbei wird von beiden Sensorsystemen 2, 4 ein Fahrvorgang geplant und übermittelt, welches wiederum gegenseitig überprüft wird. Ist die Überprüfung erfolgreich, so wird der Fahrvorgang durchgeführt bis er abgeschlossen ist. Kann kein mit beiden Sensorsystemen kompatibler Fahrvorgang gefunden werden, so übernimmt das Primärsensorsystem 2 die Kontrolle und führt seinen eigenen Fahrvorgang aus.

Falls ein Sensorsystem 2, 4 aufgrund eines elektrischen oder anderweitigen Fehlers keine Daten mehr sendet, so übernimmt automatisch das andere Sensorsystem 2, 4 die Fahrzeugkontrolle und führt seinen eigenen geplanten Fahrvorgang aus. Dies kann auch durch das Sekundärsensorsystem 4 erfolgen, welches normalerweise nicht das Fahrzeug steuert.

Der durchgeführte Fahrvorgang kann beispielsweise ein Notbremsvorgang, ein Anhalten innerhalb einer Fahrspur, aber auch ein langsames Ausrollen innerhalb einer Fahrspur sein. Zusätzlich kann vorgesehen sein, dass der Fahrer eine Aufforderung erhält, das Fahrzeug wieder vollständig zu übernehmen.

Des Weiteren verfügt das Fahrzeug 1 über eine Primäraktorik 19, die im Normalfall verwendet wird, sowie über eine Sekundäraktorik 32, welche verwendet wird, wenn ein Fehler in der Primäraktorik 19 oder des Primärsensorsystems 2 vorliegt.

Es ist vorteilhaft, wenn das Primärsensorsystem 2 und die Primäraktorik 19 an eine andere Spannungsquelle angeschlossen sind wie das Sekundärsensorsystem 4 und die Sekundäraktorik 32. Dadurch kann im Falle eines elektrischen Fehlers in einer der beiden Spannungsquellen oder in einem der angeschlossenen Steuergeräte das Fahrzeug trotzdem noch in einen sicheren Zustand überführt werden.

Beide Sensorsysteme 2, 4 sind derart eingerichtet, das Fahrzeug 1 vollständig zu kontrollieren und ein autonomes Fahren des Fahrzeugs 1 zu gewährleisten. Vorteilhaft dabei ist, wenn jeweils nur eines der beiden Sensorsysteme 2,4 aktiv ist. Insbesondere ist es vorteilhaft, wenn zunächst das Primärsensorsystem 2 aktiv ist und bei einem Fehler oder einem Ausfall des Primärsensorsystems 2 das Sekundärsensorsystem 4 einspringen kann und die Funktion des Primärsensorsystem 2 übernehmen kann.

Die Wahrnehmung der beiden Sensorsysteme 2,4 kann in einer Ausführungsform auch fusioniert werden. Hierfür, so wie auch für die Übertragung der Daten an das Backend 60, werden die Daten in geeigneter Form aufbereitet und die Datenmenge reduziert. So ist es nicht notwendig, die vollständige Bildinformation der Kamera 10 oder die Punktwolke des Lidarsensors 23 zu übertragen. Das ist insofern vorteilhaft, als sowohl zum Backend 60 als auch beispielsweise zwischen den Steuergeräten der Sensorsystem 2, 4 nur begrenzt viel Bandbreite zur Verfügung steht. Aus den Daten des anderen Sensorsystems 2, 4 und der eigenen Wahrnehmung kann dann eine Fusionswahrnehmung erstellt werden, welche eine höhere Genauigkeit und bessere Detektionsrate besitzt. Dabei werden auch die Informationen des Lidarsystems 4, welches nur beschränkt in der Lage ist, semantische Informationen zu liefern, mit der Kamerawahrnehmung fusioniert. So kann beispielsweise die semantische Information der Kamera genutzt werden, um die Lidarwahrnehmung mit Information anzureichen, z.B. Klassifikation von Lidarpunkten als Teile von Fahrspuren, Infrastruktur oder anderen Verkehrsteilnehmern. Auf diese Weise kann sowohl die Lidarminikarte und die Lidarwahrnehmung mit der Information der Kameraminikarte angereichert werden, wobei die Semantik der Kamera jedoch die punktgenaue Information des Lidarsensors 23 verwendet wird. Auf die gleiche Art und Weise kann aber auch die Detektion von Verkehrsteilnehmern, Fahrspuren oder Infrastruktur durch die Kamera 10 verbessert werden. Kameras, insbesondere Monokameras, können die Distanz von Verkehrsteilnehmern nur beschränkt gut messen. Hier ist es vorteilhaft, die Objektinformation des Lidarsensors 23 zu fusionieren. Dies führt zu einer höheren Verfügbarkeit und Genauigkeit der beiden Sensorsystem 2, 4. Insbesondere ist dies für das Primärsensorsystem 2 vorteilhaft, da so das Sekundärsensorsystem 4 nicht nur als Redundanz und zur Plausibilisierung genutzt wird, sondern auch dazu beiträgt die kundenerlebbare Wahrnehmung und damit die Fahrfunktion zu verbessern.

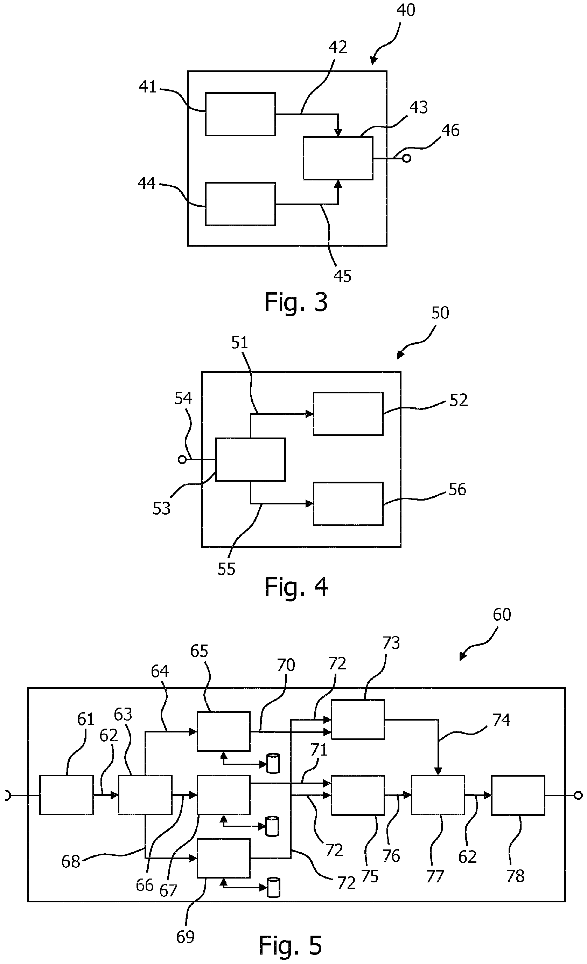

In Figur 3 ist ein schematisches Blockschaltbild eines Sendeprozesses 40 von erstellten Minikarten 42, 45 eines Primärsensorsystems 41 und eines Sekundärsensorsystems 44 gemäß einem Ausführungsbeispiel der Erfindung gezeigt. Das in Fig. 3 gezeigte Blockschaltbild zeigt das Aussenden von Daten 46 vom einem Fahrzeug zu einem Backend 60. Die von dem kamerabasierten 41 und dem lidarbasierten Sensorsystem 44 erstellten Minikarten 42, 45 werden zusammen mit der Fahrzeugposition an einen Mobilfundsender 43 übertragen und von dem Mobilfunksender 43 mittels einer drahtlosen Datenverbindung weiter an das Backend 60 zur weiteren Verarbeitung übertragen. Im Backend 60 werden die Minikarten 18, 64, 42, 31, 66, 45 aufbereiteten und plausibilisierte Kamerateilkarten 20, 51, 74 und plausibilisierte Lidarteilkarten 33, 55, 76 erstellt. Die plausibilisierten Kamera- und Lidarkarten 20, 51, 74, 33, 55, 76 werde anschließend mittels eine drahtlosen Datenverbindung an einem im Fahrzeug befindlichen Mobilfunkempfänger 21 übermittelt.

In Figur 4 ist ein schematisches Blockschaltbild eines Empfangprozesses von plausibilisierten Kamerateilkarten 20, 51, 74 und plausibilisierten Lidarteilkarten 33, 55, 76 gemäß einem Ausführungsbeispiel der Erfindung gezeigt. Der Mobilfunkempfänger 53 empfängt die plausibilisierten Teilkarten 20, 51, 74, 33, 55, 76 und leitet die plausibilisierten Kamerateilkarte 20, 51, 74 an das kamerabasierte Sensorsystem 2 weiter und die plausibilisierten Lidarteilkarten 33, 55, 76 an das lidarbasierte Sensorsystem 4 weiter.

In Figur 5 ist ein schematisches Blockschaltbild eines Backend 60 gezeigt. In Fig. 5 werden die verschiedenen Verarbeitungsschritte der Minikarten bzw. Umgebungskarten 18, 64, 42, 31, 66, 45 des kamerabasierten 2 und des lidarbasierten Sensorsystems 4 gezeigt.

Eine Mobilfunkbasisstation 61 empfängt die vom Fahrzeug 1 mittels des Mobilfunksenders 43 ausgesendeten Minikarten 18, 64, 42, 31, 66, 45 des kamerabasierten 2 und des lidarbasierten Sensorsystems 4. Die Daten 62 werden dekodiert 63 und durch das Backend 60 weiterverarbeitet. Dabei verarbeitet das Backend 60 die Kameraminikarten 18, 64, 42 und Lidarminikarten 31, 66, 45 jeweils separat und erstellt und aktualisiert 65, 67 daraus Kamerakarten 65 und Lidarkarten 67. Des Weiteren erstellt der Server eine Fusionskarte 72 auf Basis der Lidar- und Kameraminikarten 18, 64, 42, 31, 66, 45. Diese Fusionskarte 72 wird zur Plausibilisierung 73, 75 der Kamerakarte 70 und Lidarkarten 71 verwendet. Darüber können beispielsweise Einschränkungen bzw. Constraints einer fusionierten Karte 72 in die Kamerakarte 70 und/oder die Lidarkarte 71 eingefügt werden. Es ist bekannt, dass einige Objekt- oder Hindernistypen systematisch nicht mit der einen oder der anderen Sensorik erkannt werden können. In diesem Fall kann die Fusionskarte 72 dazu genutzt werden, den befahrbaren Raum weiter einzuschränken, ohne jedoch die Redundanz der beiden Verarbeitungspfade negativ zu beeinflussen. Bei der Plausibilisierung 73, 75 werden aus der Kamerakarte 70 und der Fusionskarte 72 eine plausibilisierte Kamerateilkarte bzw. eine plausibilisierten Primärsensorsystemteilkarte 20, 51, 74 und aus der Lidarkarte 71 und der Fusionskarte 72 eine plausibilisierte Lidarteilkarte bzw. eine plausibilisierten Sekundärsensorsystemteilkarte 33, 55, 76 erstellt. Diese Teilkarten 20, 51, 74, 33, 55, 76 werden kodiert und über eine drahtlose Datenverbindung, beispielsweise über eine Mobilfunkbasisstation 61, ausgesendet und dem automatisierten Fahrzeug 1 zur Verfügung stellt.

### Bezugszeichenliste

- 1: automatisiertes Fahrzeug
- 2: kamerabasiertes Sensorsystem
- 3: Erfassungsbereich des kamerabasierten Sensorsystems
- 4: lidarbasiertes Sensorsystem
- 5: Erfassungsbereich des lidarbasierten Sensorsystems
- 6: Fahrtrichtung

- 10: Kamera
- 11: Erfassung (Kamera)
- 12: Wahrnehmung / Lokalisierung (Kamera)
- 13: Planung (Kamera)
- 14: Freigabe (Kamera)
- 15: Empfangen (Kamera)
- 16: Senden (Kamera)
- 17: Lidar Wahrnehmungs-, Planungs-, Freigabedaten
- 18: Kameraminikarte, Fahrzeugposition
- 19: Primäraktorik
- 20: (plausibilisierte) Kamerateilkarte
- 21: Mobilfunkempfänger
- 22: Mobilfunksender
- 23: Lidar
- 24: Erfassung (Lidar)
- 25: Wahrnehmung / Lokalisierung (Lidar)
- 26: Planung (Lidar)
- 27: Freigabe (Lidar)
- 28: Empfangen (Lidar)
- 29: Senden (Lidar)
- 30: Kamera Wahrnehmungs-, Planungs-, Freigabedaten
- 31: Lidarminikarte, Fahrzeugposition
- 32: Sekundäraktorik
- 33: (plausibilisierte) Lidarteilkarte
- 34: kamerabasiertes Sensorsystem
- 35: lidarbasiertes Sensorsystem
- 40: Fahrzeug (senden)
- 41: kamerabasiertes Sensorsystem
- 42: Kameraminikarte, Fahrzeugposition
- 43: Mobilfunksender
- 44: lidarbasiertes Sensorsystem
- 45: Lidarminikarte, Fahrzeugposition
- 46: Daten

- 50: Fahrzeug (empfangen)
- 51: plausibilisierte Kamerateilkarte
- 52: kamerabasiertes Sensorsystem
- 53: Mobilfunkempfänger
- 54: Daten
- 55: plausibilisierte Lidarteilkarte
- 56: lidarbasiertes Sensorsystem

- 60: Backend
- 61: Mobilfunkbasisstation
- 62: Daten
- 63: Datendekodierung
- 64: Kameraminikarte, Fahrzeugposition
- 65: Kamera Kartenaktualisierung
- 66: Lidarminikarte, Fahrzeugposition
- 67: Lidar Kartenaktualisierung
- 68: Kameraminikarte, Fahrzeugposition, Lidarminikarte
- 69: Fusionskartenaktualisierung
- 70: Kamerakarte
- 71: Lidarkarte
- 72: Fusionskarte
- 73: Kamerakarten Plausibilisierung
- 74: plausibilisierte Kamerateilkarte
- 75: Lidarkarten Plausibilisierung
- 76: plausibilisierte Lidarteilkarte
- 77: Datenkodierung
- 78: Mobilfunkbasisstation

## Patentansprüche

1. Verfahren zur Lokalisierung eines Fahrzeugs (1) in einer Umgebung, umfassend die folgenden Schritte:
- Bereitstellen eines Primärsensorsystems (2, 34, 41, 52),
- Bereitstellen eines Sekundärsensorsystems (4, 35, 44, 56), wobei das Sekundärsensorsystem (4, 35, 44, 56) derart eingerichtet ist, eine Absicherung zu dem Primärsensorsystem (2, 34, 41, 52) bereitzustellen, wobei das Primärsensorsystem (2, 34, 41, 52) und das Sekundärsensorsystem (4, 35, 44, 56) derart eingerichtet sind, das Fahrzeug (1) vollständig zu kontrollieren,
- Detektieren (11, 24) von Umgebungsdaten mittels des Primärsensorsystems (2, 34, 41, 52) und des Sekundärsensorsystems (4, 35, 44, 56),
- Erstellen von Umgebungskarten (18, 64, 42, 31, 66, 45) aus den Umgebungsdaten des Primärsensorsystem (2, 34, 41, 52) und des Sekundärsensorsystems (4, 35, 44, 56) mittels eines Rechnersystems, wobei das Rechensystem eine Recheneinheit des Primärsensorsystems und eine Recheneinheit des Sekundärsensorsystems umfasst, und wobei das Rechensystem eine dritte Recheneinheit (60) umfasst, wobei das Erstellen von Umgebungskarten aus den Umgebungsdaten des Primärsensorsystem (2, 34, 41, 52) und des Sekundärsensorsystems (4, 35, 44, 56) mittels der Recheneinheit des Primärsensorsystems (2, 34, 41, 52) und der Recheneinheit des Sekundärsensorsystem (4, 35, 44, 56) erfolgt,
- Übertragung der erstellten Umgebungskarten (18, 64, 42) des Primärsensorsystems (2, 34, 41, 52) und der erstellten Umgebungskarten (31, 66, 45) des Sekundärsensorsystems (4, 35, 44, 56) an die dritte Recheneinheit (60) des Rechnersystems,
- Erzeugung von zumindest einer plausibilisierten Primärsensorsystemteilkarte (20, 51, 74) und zumindest einer plausibilisierten Sekundärsensorsystemteilkarte (33, 55, 76) mittels des Rechnersystems, wobei der Schritt der Erzeugung von zumindest einer plausibilisierten Primärsensorsystemteilkarte (33, 55, 76) und zumindest einer plausibilisierten Sekundärsensorsystemteilkarte (33, 55, 76) auf der dritten Recheneinheit (60) durchgeführt wird,
wobei der Schritt der Erzeugung von zumindest einer plausibilisierten Primärsensorsystemteilkarte (33, 55, 76) und zumindest einer plausibilisierten Sekundärsensorsystemteilkarte (33, 55, 76) die folgenden weiteren Schritte umfasst:
- Erstellung (69) einer Fusionskarte (72) auf Basis der Umgebungskarte des Primärsensorsystems (2, 34, 41, 52) und der Umgebungskarte des Sekundärsensorsystems (4, 35, 44, 56), und
- Verwendung der Fusionskarte (72) zur Erstellung der plausibilisierten Primärsensorsystemteilkarte (33, 55, 76) und zur Erstellung der plausibilisierten Sekundärsensorsystemteilkarte (33, 55, 76),
- Übertragung der plausibilisierten Primärsensorsystemteilkarte (20, 51, 74) an das Primärsensorsystem (2, 34, 41, 52) und Übertragung der plausibilisierten Sekundärsensorsystemteilkarte (33, 55, 76) an das Sekundärsensorsystem (4, 35, 44, 56),
- Lokalisierung des Fahrzeugs (1) in der Umgebung durch einen Abgleich der Umgebungsdaten des Primärsensorsystems (2, 34, 41, 52) mit der plausibilisierten Primärsensorsystemteilkarte (33, 55, 76) und durch einen Abgleich der Umgebungsdaten des Sekundärsensorsystems (4, 35, 44, 56) mit der plausibilisierten Sekundärsensorsystemteilkarte (33, 55, 76),
- Vergleich der Lokalisierung des Fahrzeugs durch das Primärsensorsystem (2, 34, 41, 52) mit der Lokalisierung des Fahrzeugs durch das Sekundärsensorsystem (4, 35, 44, 56),
- Erteilung einer Freigabe zur Fortführung eines automatisierten Fahrens des Fahrzeugs (1) durch das Primärsensorsystem (2, 34, 41, 52) und durch das Sekundärsensorsystem (4, 35, 44, 56), wenn die Lokalisierung des Fahrzeugs (1) durch das Primärsensorsystem (2, 34, 41, 52) und durch das Sekundärsensorsystem (4, 35, 44, 56) innerhalb vordefinierter Grenzen liegt,
- Durchführung eines Fahrvorgangs, sobald die Freigabe eines der beiden Sensorsysteme (2, 34, 41, 52, 4, 35, 44, 56) nicht erteilt wurde und die Lokalisierung des Fahrzeugs (1) eines der beiden Sensorsysteme (2, 34, 41, 52, 4, 35, 44, 56) nicht innerhalb der vordefinierten Grenzen liegt.

2. Verfahren nach Anspruch 1, **dadurch gekennzeichnet, dass** die dritte Recheneinheit (60) Teil eines Back-End (60) ist, wobei sich das Back-End (60) außerhalb des Fahrzeugs befindet (1).

3. Verfahren nach einem der vorherigen Ansprüche, **dadurch gekennzeichnet, dass** der Schritt der Übertragung der erstellten Umgebungskarten (18, 64, 42) des Primärsensorsystems (2, 34, 41, 52) und der erstellten Umgebungskarten des Sekundärsensorsystems (31, 66, 45) an das Rechnersystem, mittels einer drahtlosen Datenverbindung erfolgt.

4. Verfahren nach einem der vorherigen Ansprüche, **dadurch gekennzeichnet, dass** das Primärsensorsystem (2, 34, 41, 52) ein kamerabasiertes Sensorsystem ist.

5. Verfahren nach einem der vorherigen Ansprüche, **dadurch gekennzeichnet, dass** das Sekundärsensorsystem (4, 35, 44, 56) ein lidarbasiertes Sensorsystem ist.

6. Verfahren nach einem der vorherigen Ansprüche, **dadurch gekennzeichnet, dass** der Schritt der Durchführung eines Fahrvorgangs ein Notbremsvorgang oder ein Anhalten innerhalb einer Fahrspur oder ein langsames Ausrollen innerhalb einer Fahrspur oder die Aufforderung an den Fahrer, das Fahrzeug vollständig zu übernehmen, umfasst.

7. Vorrichtung zur Lokalisierung eines Fahrzeugs (1) in einer Umgebung, **dadurch gekennzeichnet, dass** die Vorrichtung derart eingerichtet ist, das Verfahren nach einem der Ansprüche 1 bis 6 durchzuführen.

8. Fahrassistenzsystem mindestens aufweisend eine Vorrichtung nach Anspruch 7.

9. Computerprogrammprodukt mit Programmcodemitteln, welche in einem computerlesbaren Medium gespeichert sind, um das Verfahren nach einem der vorhergehenden Ansprüche 1 bis 6 durchzuführen, wenn das Computerprogrammprodukt auf einem Prozessor einer elektronischen Steuerungseinheit abgearbeitet wird.

## Claims

1. Method for locating a vehicle (1) in an environment, comprising the following steps:
- providing a primary sensor system (2, 34, 41, 52),
- providing a secondary sensor system (4, 35, 44, 56), wherein the secondary sensor system (4, 35, 44, 56) is designed to provide protection for the primary sensor system (2, 34, 41, 52), wherein the primary sensor system (2, 34, 41, 52) and the secondary sensor system (4, 35, 44, 56) are designed to completely control the vehicle (1),
- detecting (11, 24) environment data by way of the primary sensor system (2, 34, 41, 52) and the secondary sensor system (4, 35, 44, 56),
- creating environment maps (18, 64, 42, 31, 66, 45) from the environment data of the primary sensor system (2, 34, 41, 52) and the secondary sensor system (4, 35, 44, 56) by way of a computer system, wherein the computing system comprises a computing unit of the primary sensor system and a computing unit of the secondary sensor system, and wherein the computing system comprises a third computing unit (60), wherein environment maps are created from the environment data of the primary sensor system (2, 34, 41, 52) and of the secondary sensor system (4, 35, 44, 56) by way of the computing unit of the primary sensor system (2, 34, 41, 52) and the computing unit of the secondary sensor system (4, 35, 44, 56),
- transmitting the created environment maps (18, 64, 42) of the primary sensor system (2, 34, 41, 52) and the created environment maps (31, 66, 45) of the secondary sensor system (4, 35, 44, 56) to the third computing unit (60) of the computer system,
- generating at least one plausibility-checked primary sensor system partial map (20, 51, 74) and at least one plausibility-checked secondary sensor system partial map (33, 55, 76) by way of the computer system, wherein the step of generating at least one plausibility-checked primary sensor system partial map (33, 55, 76) and at least one plausibility-checked secondary sensor system partial map (33, 55, 76) is performed on the third computing unit (60),
wherein the step of generating at least one plausibility-checked primary sensor system partial map (33, 55, 76) and at least one plausibility-checked secondary sensor system partial map (33, 55, 76) comprises the following further steps:
- creating (69) a fusion map (72) on the basis of the environment map of the primary sensor system (2, 34, 41, 52) and the environment map of the secondary sensor system (4, 35, 44, 56),
- using the fusion map (72) to create the plausibility-checked primary sensor system partial map (33, 55, 76) and to create the plausibility-checked secondary sensor system partial map (33, 55, 76),
- transmitting the plausibility-checked primary sensor system partial map (20, 51, 74) to the primary sensor system (2, 34, 41, 52) and transmitting the plausibility-checked secondary sensor system partial map (33, 55, 76) to the secondary sensor system (4, 35, 44, 56),
- locating the vehicle (1) in the environment by comparing the environment data of the primary sensor system (2, 34, 41, 52) with the plausibility-checked primary sensor system partial map (33, 55, 76) and by comparing the environment data of the secondary sensor system (4, 35, 44, 56) with the plausibility-checked secondary sensor system partial map (33, 55, 76),
- comparing the locating of the vehicle by the primary sensor system (2, 34, 41, 52) with the locating of the vehicle by the secondary sensor system (4, 35, 44, 56),
- granting clearance to continue automated driving of the vehicle (1) by way of the primary sensor system (2, 34, 41, 52) and by way of the secondary sensor system (4, 35, 44, 56) if the locating of the vehicle (1) by the primary sensor system (2, 34, 41, 52) and by the secondary sensor system (4, 35, 44, 56) lies within predefined limits,
- performing a driving procedure as soon as the clearance of one of the two sensor systems (2, 34, 41, 52, 4, 35, 44, 56) has not been granted and the locating of the vehicle (1) from one of the two sensor systems (2, 34, 41, 52, 4, 35, 44, 56) does not lie within the predefined limits.

2. Method according to Claim 1, **characterized in that** the third computing unit (60) is part of a backend (60), wherein the backend (60) is located outside the vehicle (1) .

3. Method according to either of the preceding claims, **characterized in that**
the step of transmitting the created environment maps (18, 64, 42) of the primary sensor system (2, 34, 41, 52) and the created environment maps of the secondary sensor system (31, 66, 45) to the computer system is carried out by way of a wireless data link.

4. Method according to one of the preceding claims, **characterized in that** the primary sensor system (2, 34, 41, 52) is a camera-based sensor system.

5. Method according to one of the preceding claims, **characterized in that** the secondary sensor system (4, 35, 44, 56) is a lidar-based sensor system.

6. Method according to one of the preceding claims, **characterized in that**
the step of performing a driving procedure comprises an emergency braking procedure or a stopping procedure within a lane or slow coasting within a lane or the request to the driver to completely take over the vehicle.

7. Device for locating a vehicle (1) in an environment, **characterized in that** the device is designed to perform the method according to one of Claims 1 to 6.

8. Driver assistance system at least having a device according to Claim 7.

9. Computer program product having program code means that are stored in a computer-readable medium in order to perform the method according to one of preceding Claims 1 to 6 when the computer program product is run on a processor of an electronic control unit.

## Revendications

1. Procédé de localisation d'un véhicule (1) dans un environnement, ledit procédé comprenant les étapes suivantes :
- fournir un système de détection principal (2, 34, 41, 52),
- fournir un système de détection secondaire (4, 35, 44, 56), le système de détection secondaire (4, 35, 44, 56) étant conçu de manière à assurer la protection du système de détection principal (2, 34, 41, 52), le système de détection principal (2, 34, 41, 52) et le système de détection secondaire (4, 35, 44, 56) étant conçus pour contrôler entièrement le véhicule (1),
- détecter (11, 24) des données d'environnement au moyen du système de détection principal (2, 34, 41, 52) et du système de détection secondaire (4, 35, 44, 56),
- créer des cartes d'environnement (18, 64, 42, 31, 66, 45) à partir des données d'environnement du système de détection principal (2, 34, 41, 52) et du système de détection secondaire (4, 35, 44, 56) à l'aide d'un système informatique, le système informatique comprenant une unité de calcul du système de détection principal et une unité de calcul du système de détection secondaire, et le système informatique comprenant une troisième unité de calcul (60), la création de cartes d'environnement à partir des données d'environnement du système de détection principal (2, 34, 41, 52) et du système de détection secondaire (4, 35, 44, 56) étant effectuée au moyen de l'unité de calcul du système de détection principal (2, 34, 41, 52) et de l'unité de calcul du système de détection secondaire (4, 35, 44, 56),
- transmettre les cartes d'environnement créées (18, 64, 42) du système de détection principal (2, 34, 41, 52) et les cartes d'environnement créées (31, 66, 45) du système de détection secondaire (4, 35, 44, 56) à la troisième unité de calcul (60) du système informatique,
- générer au moins une sous-carte de système de détection principal plausibilisée (20, 51, 74) et au moins une sous-carte de système de détection secondaire plausibilisée (33, 55, 76) au moyen du système informatique, l'étape de génération d'au moins une sous-carte de système de détection principal plausibilisée (33, 55, 76) et d'au moins une sous-carte de système de détection secondaire plausibilisée (33, 55, 76) étant réalisée sur la troisième unité de calcul (60),
l'étape de génération d'au moins une sous-carte de système de détection principal plausibilisée (33, 55, 76) et d'au moins une sous-carte de système de détection secondaire plausibilisée (33, 55, 76) comprenant les étapes supplémentaires suivantes :
- créer (69) une carte de fusion (72) à partir de la carte d'environnement du système de détection principal (2, 34, 41, 52) et de la carte d'environnement du système de détection secondaire (4, 35, 44, 56), et
- utiliser la carte de fusion (72) pour créer la sous-carte de système de détection principal plausibilisée (33, 55, 76) et pour créer la sous-carte de système de détection secondaire plausibilisée (33, 55, 76),
- transmettre la sous-carte de système de détection principal plausibilisée (20, 51, 74) au système de détection principal (2, 34, 41, 52) et transmettre la sous-carte de système de détection secondaire plausibilisée (33, 55, 76) au système de détection secondaire (4, 35, 44, 56),
- localiser le véhicule (1) dans l'environnement par ajustement des données d'environnement du système de détection principal (2, 34, 41, 52) avec la sous-carte de système de détection principal plausibilisée (33, 55, 76) et par ajustement des données d'environnement de système de détection secondaire (4, 35, 44, 56) avec la sous-carte de système de détection secondaire plausibilisée (33, 55, 76),
- comparer la localisation du véhicule par le système de détection principal (2, 34, 41, 52) à la localisation du véhicule par le système de détection secondaire (4, 35, 44, 56),
- délivrer une autorisation de poursuivre la conduite automatisée du véhicule (1) par le système de détection principal (2, 34, 41, 52) et par le système de détection secondaire (4, 35, 44, 56) si la localisation du véhicule (1) par le système de détection principal (2, 34, 41, 52) et par le système de détection secondaire (4, 35, 44, 56) est dans des limites prédéfinies,
- réaliser un processus de conduite dès que l'autorisation d'un des deux systèmes de détection (2, 34, 41, 52, 4, 35, 44, 56) n'a pas été délivrée et la localisation du véhicule (1) d'un des deux systèmes de détection (2, 34, 41, 52, 4, 35, 44, 56) n'est pas dans les limites prédéfinies.

2. Procédé selon la revendication 1, **caractérisé en ce que**
la troisième unité de calcul (60) fait partie d'une extrémité arrière (60), l'extrémité arrière (60) étant situé à l'extérieur du véhicule (1).

3. Procédé selon l'une des revendications précédentes, **caractérisé en ce que**
l'étape de transmission des cartes d'environnement créées (18, 64, 42) du système de détection principal (2, 34, 41, 52) et des cartes d'environnement créées du système de détection secondaire (31, 66, 45) au système informatique étant réalisée au moyen d'une liaison de données sans fil.

4. Procédé selon l'une des revendications précédentes, **caractérisé en ce que** le système de détection principal (2, 34, 41, 52) est un système de détection à caméra.

5. Procédé selon l'une des revendications précédentes, **caractérisé en ce que** le système de détection secondaire (4, 35, 44, 56) est un système de détection basé sur lidar.

6. Procédé selon l'une des revendications précédentes, **caractérisé en ce que**
l'étape de réalisation d'un processus de conduite comprend un processus de freinage d'urgence, ou un arrêt à l'intérieur d'une voie de roulement, ou un roulement libre lent à l'intérieur d'une voie de roulement, ou l'incitation du conducteur à prendre le contrôle total du véhicule.

7. Dispositif de localisation d'un véhicule (1) dans un environnement, **caractérisé en ce que** le dispositif est conçu pour mettre en œuvre le procédé selon l'une des revendications 1 à 6.

8. Système d'aide à la conduite comportant au moins un dispositif selon la revendication 7.

9. Progiciel comprenant des moyens de code de programme, qui sont stockés dans un support lisible par ordinateur, pour mettre en œuvre le procédé selon l'une des revendications précédentes 1 à 6, lorsque le progiciel est exécuté sur un processeur d'une unité de commande électronique.
